# FASCICULE DE BREVET EUROPEEN

(11) **EP 2 296 488 B1**
(45) Date de publication et mention de la délivrance du brevet: **09.05.2012**
(21) Numéro de dépôt: 09784466.6
(22) Date de dépôt: 06.07.2009
(51) Int. Cl.: A23J 3/18, A23K 1/00, A23K 1/18, A23L 1/00

(54) **PELLETS DE GLUTEN DE BLE**
HEFEGLUTENPILLEN
WHEAT GLUTEN PELLETS

(30) Priorité: 11.07.2008 FR 0854787
(43) Date de publication de la demande: 23.03.2011
(73) Titulaire: Roquette Freres, 62136 Lestrem (FR)
(72) Inventeur: DELPORTE, Christian, F-59194 Anhiers (FR); FOULON, Franck, F-02290 Vic sur Aisne (FR)
(74) Mandataire: Cabinet Plasseraud
(86) Numéro de dépôt international: PCT/FR2009/051319
(87) Numéro de publication internationale: WO 2010/004196

(56) Documents cités:
- WO-A-99/44437
- WO-A-2007/054465
- US-A- 5 102 671
- US-A1- 2005 214 349

## Description

La présente invention a pour objet des pellets de gluten de blé, ainsi que leur procédé de fabrication.

Le gluten de blé se présente classiquement sous deux formes distinctes : le gluten de blé vital et le gluten de blé dévitalisé.

Le gluten de blé vital (également appelé gluten élastique) est la fraction protéique insoluble dans l'eau extraite de la farine de blé par voie humide puis séchée.

Le gluten de blé vital possède des propriétés fonctionnelles très spécifiques.

Lorsqu'il est réhydraté, il forme une pâte cohésive viscoélastique, capable d'absorber 1,5 à 2 fois son poids en eau.

La viscoélasticité et l'absorption d'eau sont à l'origine du terme « vital ».

Les gluténines et les gliadines, les deux composantes protéiques majeures du gluten vital, interagissent en présence d'eau et sont à l'origine de ces propriétés viscoélastiques :
- l'extensibilité (i.e. la propriété d'allongement jusqu'à la rupture) est due aux gliadines de faible poids moléculaire,
- l'élasticité (i.e. la propriété de retour à l'état initial après déformation) et la ténacité (i.e. la propriété de résistance à la déformation) sont dues aux gluténines de plus haut poids moléculaire.

Le gluten dévitalisé est quant à lui obtenu par dénaturation (notamment thermique, ou par solubilisation enzymatique) du gluten de blé vital.

Il ne présente alors plus ses propriétés viscoélastiques à l'état hydraté. Sa teneur en protéines et sa valeur nutritive restent cependant celles du gluten de blé vital.

En fonction des propriétés viscoélastiques requises, les applications du gluten de blé vital ou dévitalisé sont nombreuses :
- en alimentation humaine : notamment en meunerie, comme auxiliaire de panification, dans les produits de boulangerie et viennoiserie ainsi qu'en pâtisserie, dans la fabrication des nouilles ; dans la fabrication des céréales pour petits déjeuners, des snacks et des produits carnés ;
- en alimentation animale : notamment comme aliments pour crevettes, aliments pour porcelets, aliments d'allaitement, aliments pour poissons, aliments pour animaux de compagnie ;
- en fermentation : comme support de microorganismes dans les systèmes mettant en oeuvre des cellules immobilisées.

L'utilisation de gluten vital ou dévitalisé dans les applications citées ci-dessus est cependant gênée par le fait que le gluten en poudre ne s'écoule pas librement ou génère de la poussière lors des opérations de déchargement en vrac.

La dispersion dans l'eau, lorsqu'elle est obtenue, n'est pas très stable, les particules de gluten ayant tendance à se mettre en masse et à s'agglomérer.

L'hydratation d'une poudre contenant une proportion importante de gluten vital conduit par ailleurs à un produit grumeleux qui, par agitation vigoureuse, est transformé en masse élastique caoutchouteuse très difficile à travailler.

Pour remédier à cette situation, les spécialistes du domaine considéré ont très vite proposé d'agglomérer la poudre de gluten de blé vital sous forme de pellets pour en faciliter la manutention et l'utilisation.

Deux catégories de pellets sont alors proposée
- des pellets dont le gluten de blé a conservé toutes ses propriétés, et conserve ainsi l'appellation de gluten de blé vital,
- des pellets préparés au moyen de procédés thermiques, ce qui conduit à dénaturer les protéines ; les pellets seront donc composés de gluten de blé dévitalisé.

Pour les pellets de gluten de blé vital, on peut considérer les enseignements :
- de l'US 3.925.343, qui décrit la fabrication d'agglomérats de gluten de blé par un procédé qui en préserve le caractère vital.

Ce procédé consiste à soumettre, dans un lit fluidisé, les particules individuelles de gluten à l'action d'un agent mouillant de façon à rendre collantes les surfaces des particules, à mélanger intimement lesdites particules de manière à ce qu'elles adhèrent les unes aux autres, sous la forme d'agglomérats grossiers et poreux.

Ces agglomérats sont ensuite séchés de manière à présenter une teneur en humidité résiduelle inférieure à 10 %.

La forme et la dimension de ces particules et cependant très aléatoires (taille majoritairement supérieure à 149 µm).
- de l'EP 1.785.039, qui porte sur des pellets consistant essentiellement en protéines comprimées, caractérisés préférentiellement en ce que les protéines comprennent du gluten vital.

Leur procédé de fabrication fait appel à des étapes nécessitant de l'air chaud ou de la vapeur pour augmenter la température des protéines et/ou leur humidité de 0 à 5 %, de préférence de plus de 3 % et ensuite de les introduire dans un moule pour fabriquer lesdits pellets.

La teneur en humidité maximale des pellets de gluten de blé vital est au maximum de 11,5 %, de préférence au maximum de 8 %, plus préférentiellement au maximum de 6 %.
- l'EP 1.527.700, qui est relatif à une composition alimentaire pour poisson, caractérisée en ce qu'elle comprend de 1 à 75 % en poids de gluten vital, et de 25 à 85 % d'huile de graines d'oléagineux décortiqués et/ou de germes de maïs, et aux pellets ainsi obtenus.

Le procédé consiste ici à mélanger les ingrédients de la composition alimentaire pour poisson, de les « modeler » en pellets puis de les traiter à la vapeur pendant de 1 à 30 s.
- l'EP 838.159, qui décrit un procédé de réduction d'une masse de gluten vital caractérisé par le fait que la masse de gluten humide est réduite en taille lorsqu'elle est dans un état cassant.

La réduction en taille consiste à refroidir la masse de gluten à une température de -75 °C ou moins, former des feuillets de 0,35 cm ou moins ou former des granules de 1 à 100 mm avant de refroidir et utiliser des forces mécaniques de rupture.

A noter : l'élimination des cristaux de glaces formés durant le refroidissement à la surface des particules formées, le séchage des particules de gluten réduit en taille, et le maintien de la vitalité du gluten à toutes les températures testées.
- l'EP 1.785.039, qui est relatif à des pellets constitués essentiellement de protéines comprimées, dont les protéines comprennent du gluten de blé vital.

Pour obtenir ces pellets, le procédé décrit consiste à soumettre le gluten vital, dans un équipement adapté, à un traitement avec de l'air chaud ou de la vapeur, pour augmenter la température des protéines et/ou le contenu en humidité à une valeur comprise entre 0 et 5 %, de préférence de l'ordre de 3 %.

Les protéines sont ensuite moulées en pellets.

Il est cependant recommandé de contrôler finement ces étapes, en apportant une attention toute particulière :
- à la configuration de la matrice pour la fabrication des pellets, qui conditionne leur teneur en humidité. Il ainsi nécessaire ici de contrôler le rapport (A) de l'épaisseur sur le diamètre desdits pellets, qu'il faut maintenir entre 10 et 25, et
- *au rapport (A) sur la température du procédé.*
   Ces données empiriques ont été traduites par l'expression d'un rapport (B) : rapport des températures sur (A), fixé à une valeur comprise entre 2 et 8.

De manière plus spécifique, les valeurs de température sont alors réglées entre 50 et 80°C.

Ces multiples contrôles ne rendent pas ce procédé particulièrement attractif.

Pour les pellets de gluten de blé dévitalisé, on peut considérer les enseignements :
- de l'EP 711.510 de NISSHIN FLOUR MILLLING qui décrit un procédé de production de matériels de fermentation, présentant une étape de fabrication de pellets de gluten. L'humidité desdits pellets ainsi fabriqués serait comprise entre 12 et 18 % ;la possibilité de fabriquer des pellets est fonction de la teneur en humidité des protéines et de leur dénaturation.

Le procédé mis en oeuvre consiste à envoyer de la vapeur directement sur la poudre de gluten. La teneur en eau du gluten vital « moulé » est de plus de 12 %; les pellets ont par ailleurs une taille de l'ordre du millimètre.
- de l'article de E. BARDI et al, in Process Biochemistry, 32-8, 691-696, 1997), dans lequel sont décrits des pellets de gluten utilisés comme support de microorganismes, telles que les levures.

Leur procédé de fabrication consiste à mélanger de la farine de blé avec de l'eau du robinet ; la pâte obtenue est ensuite extrudée, puis abondamment lavée pour en éliminer l'amidon.

Le gluten est alors moulé en petites sphères (pellets présentant un diamètre de 1,5 à 2 cm), séchées à 105°C pendant 5 heures puis refroidies à température ambiante.

Le traitement d'extrusion et de séchage comme énoncé conduit bien évidemment à des pellets de gluten dévitalisé.
- du brevet US 3.605.643 de BARR et al. qui est relatif à un dispositif de moulage du gluten en pellets et qui a surtout pour finalité de mettre en forme et de sécher la masse pâteuse du gluten.

Le procédé consiste à introduire le gluten humide dans un flux d'air chaud sous la forme de pellets discrets qui sont enrobés avec du matériel partiellement séché en suspension dans ledit flux d'air avant d'être soumis à un traitement de désintégration.

De tout ce qui précède, on constate que les procédés de pelletisation visant à préserver les propriétés viscoélastiques du gluten nécessitent la mise en oeuvre de méthodes complexes et finement contrôlées.

Quant aux méthodes de fabrication de pellets de gluten de blé dévitalisé, plus simples à mettre en oeuvre, elles se font bien évidemment au détriment des propriétés du gluten vital.

*L'invention a pour but de proposer un nouveau procédé de pelletisation de gluten de blé vitalqui ne présente pas les incon vénients des procédés connus.*

*Les pellets de gluten de blé obtenus selon ce procédé* conservent une capacité de rétention d'eau suffisante et leurs propriétés d'élasticité sont réduites, au sens où à ténacité constante, le gluten ainsi pellétisé perd de son extensibilité par rapport à celle des pellets de gluten de blé vital classiques.

*Les pellets de gluten de blé selon la présente invention peuvent ainsi être qualifiés de « partiellement vital* ».L'invention a donc pour objet des pellets de gluten de blé, caractérisés en ce qu'ils présentent :
- une capacité de rétention d'eau, déterminée selon un test A, comprise entre 40 et 160 %, de préférence comprise entre 100 et 150 %,
- un comportement viscoélastique, selon l'alvéographe de Chopin, égal au rapport de la résistance de la déformation sur l'extensibilité P/L compris entre 3 et 10, de préférence compris entre 3 et 8.

Le caractère partiellement vital des pellets de gluten de blé conformes à l'invention se traduit tout d'abord par leur capacité préservée de rétention d'eau.

Cette capacité de rétention d'eau est déterminée selon un test A.

Ce test A consiste tout d'abord à broyer les pellets de gluten de blé sur broyeur IKA A10 fabriqué par la société IKA®.

Le broyage consiste à placer 30 g de pellets dans le broyeur puis à broyer sous circulation d'eau froide pendant 2 minutes. La granulométrie du broyat obtenu est de l'ordre de 0 refus sur 500 µm, < 10% de refus sur 250 µm, < 50 % de refus sur 100 µm.

Dans une coupelle, on pèse 10,0 g de pellets ainsi broyés. On ajoute 25 ml d'eau potable (entre 5 et 20°C) et on mélange avec une baguette en verre.

On laisse reposer 15 minutes.

On extrait la quantité d'eau non retenue par centrifugation (10 min à 4000 tours).

On laisse la centrifugeuse s'arrêter seule (sans frein), jette le surnageant et pèse le gluten hydraté restant (P).

La rétention s'exprime selon l'équation (P-10) x 10 exprimé en %.

Le pourcentage d'eau retenue traduit donc la capacité de rétention d'eau.

Cette capacité de rétention d'eau des pellets de gluten conformes à l'invention est déterminée à une valeur comprise entre 40 et 160 %, de préférence comprise entre 100 et 150 %, par exemple entre 100 et 145%, ou entre 100 et 140%.

A titre comparatif, le gluten de blé vital présente une capacité de rétention d'eau, déterminée selon le test A, comprise entre 150 et 180 %.

Les pellets de gluten conformes à l'invention présentent donc une capacité de rétention d'eau légèrement réduite par rapport au gluten de blé vital.

Le gluten dévitalisé quant à lui n'a aucune capacité de rétention d'eau au sens du test A.

Le caractère partiellement vital des pellets de gluten de blé conformes à l'invention se traduit également par leur comportement viscoélastique, déterminé selon l'alvéographe de Chopin.

L'alvéographe de Chopin est un test connu de l'homme du métier, test qui permet de mesurer les capacités de ténacité et d'extensibilité d'une pâte formée avec un mélange d'amidon de blé, de gluten de blé des pellets broyés comme décrit ci-dessus, de glycérine, d'eau salée à 45 g/l, en conservant pour tous les essais un rapport constant eau/gluten (hydratation).

Le principe de la mesure consiste à former une bulle en insufflant de l'air sous une fine lamelle de pâte, jusqu'à sa rupture. L'alvéogramme représente le tracé de la pression d'air retenue par la bulle en fonction du temps.

L'interprétation de ces paramètres se fait comme suit :
- P : représente la résistance à la déformation de la pâte (ou ténacité) sous la pression de l'air insufflé.

Elle est déterminée par la mesure de la hauteur maximale du graphique entre la base et le sommet du pic, en mm.

Elle est appelée surpression maximale ou plus couramment pression puisque c'est la pression maximale enregistrée à l'intérieur de la bulle (exprimée en mm H₂O).
- L : correspond à l'extensibilité de la pâte, depuis le début du gonflement jusqu'à l'éclatement.

C'est la longueur du graphique en mm.
- P/L : C'est le rapport de configuration du graphique. Il s'obtient en divisant la valeur du P par la valeur du L.

Les pellets de gluten conformes à l'invention présentent alors un comportement viscoélastique, selon l'alvéographe de Chopin, déterminé à une valeur du paramètre P/L compris entre 3 et 10, de préférence compris entre 3 et 8, par exemple entre 3,5 et 10 ou entre 4 et 8.

A titre comparatif, le gluten de blé vital présente une valeur du paramètre P/L inférieur ou égal à 3.

Les pellets de gluten de blé selon l'invention peuvent être également caractérisés par un comportement viscoélastique, selon l'alvéographe de Chopin, déterminé à une valeur du paramètre L inférieur à 100, de préférence compris entre 20 et 80, par exemple entre 20 et 90.

A titre comparatif, le gluten de blé vital présente une valeur du paramètre L supérieur ou égal à 100.

Le gluten dévitalisé ne présentant aucune propriété viscoélastique, ne peut donc être caractérisé par l'alvéographe de Chopin.

Les valeurs de rétention d'eau et de paramètres selon l'alvéographe de Chopin traduisent le caractère partiellement vital des pellets de gluten de blé conformes à l'invention.

Les pellets de gluten de blé conformes à l'invention conservent en effet une capacité de rétention d'eau suffisante, permettant encore au gluten d'exprimer son aptitude à former un réseau.

Les pellets de gluten de blé conformes à l'invention peuvent encore être caractérisés par :
- leur teneur en protéines,
- leur humidité relative,
- leur durabilité.

La teneur en protéines est déterminée par la mesure de la teneur en azote total selon la méthode normée (NF V18-120) par la méthode DUMAS. Cette méthode consiste en une combustion à haute température de l'échantillon. Les différents éléments de l'échantillon (C, H, N, S, O) se retrouvent sous forme gazeuse (CO₂, H₂O, Nox, SO₂ halogènes, O₂ en excès).

Différents pièges ainsi que des catalyseurs d'oxydation et de réduction permettent de ne conserver que N₂. Ce gaz est ensuite dosé grâce à un détecteur catharométrique dont le principe de détection est lié à la conductibilité du gaz à doser.

La teneur en protéines est calculée en regard de la réponse du détecteur préalablement étalonné, et est exprimée en N6, 25.

Les pellets de gluten de blé conformes à l'invention présentent alors une teneur en protéines de plus de 80 % N6,25 exprimé par rapport au poids sec des pellets (N6,25/sec).

La détermination de l'humidité relative (ou perte à la dessiccation) est réalisée par la mesure de la perte de masse après traitement en étuve réglée à 130 - 133°C, sous pression atmosphérique, de 5 grammes de produit broyé sur broyeur IKA (tel que décrit ci-dessus), pendant 1 h 30.

Les pellets de gluten de blé conformes à l'invention présentent alors une humidité relative comprise entre 6 et 12 %.

La durabilité, quant à elle, représente la quantité de pellets non détériorés et retenus sur un tamis lorsque ces pellets sont mis en mouvement dans un malaxeur.

Pour ce faire, on place une masse (m1) de 500 g de pellets dans malaxeur de type Rotor Quick Test CWZ 302, met en mouvement pendant 10 secondes et tamise pendant 10 secondes sur un tamis de mailles carrées 2,5 mm.

On pèse le refus sur tamis de masse (m2).

La durabilité s'exprime selon l'équation m2/m1 x 100, exprimée en %.

Les pellets de gluten de blé conformes à l'invention présentent alors une durabilité comprise entre 50 et 100 %, de préférence comprise entre 80 et 100 %.

L'ensemble des propriétés des pellets de gluten de blé conformes à l'invention permet ainsi de les mettre avantageusement en oeuvre dans des procédés de fabrication d'aliments pour animaux, procédés dans lesquels de nombreuses contraintes rendent difficiles l'utilisation de gluten de blé vital.

On peut citer, parmi lesdites contraintes, la nécessité de :
- réceptionner une poudre de gluten en vrac,
- de préserver une capacité de rétention d'eau et de propriété liante suffisantes par rapport au gluten de blé vital,
- d'ajouter de l'eau ou de la vapeur d'eau dans un mélange contenant une proportion importante de gluten, tout en évitant les problèmes de formation d'une pâte trop élastique.

Ces procédés sont classiquement les procédés de fabrication d'aliments extrudés pour poissons ou animaux de compagnie, la fabrication d'aliments en pellets pour porcelets ou crevettes, les substituts de lait à diluer dans l'eau pour les jeunes mammifères.

Les pellets de gluten de blé conformes à l'invention sont ainsi avantageusement utilisées dans des procédés de fabrication de préparations alimentaires pour animaux comprenant de 5 à 50 % de gluten de blé, préparations choisies dans le groupe des préparations extrudées, des préparations pellétisées et des préparations destinées à être réhydratées.

Les pellets gluten de blé conformes à l'invention sont susceptibles d'être préparés à l'aide d'un procédé qui consiste à comprimer de la poudre de gluten de blé vital dans des conditions particulières.

Ce procédé comprend les étapes suivantes consistant à :
1) préparer une poudre de gluten de blé vital de granulométrie telle qu'au moins 20 %, de préférence au moins 50 % des particules présentent une taille supérieure à 250 µm,
2) introduire la poudre de gluten de blé ainsi préparée dans le malaxeur d'une presse à pellets,
3) conditionner la poudre de gluten de blé ainsi préparée par addition régulée de vapeur à l'entrée du malaxeur afin d'obtenir à la sortie du malaxeur une température du mélange air-poudre comprise entre 10 et 50°C, de préférence comprise entre 30 et 45°C,
4) introduire la poudre de gluten de blé dans la matrice de la presse à pellets afin d'obtenir les pellets de gluten de blé,
5) refroidir les pellets au travers d'un refroidisseur horizontal,
6) récupérer les pellets ainsi obtenus.

Dans l'étape 1, on prépare une poudre de gluten de blé vital de granulométrie telle qu'au moins 20 % des particules présentent une taille supérieure à 250 µm.

On entend par poudre de gluten de blé vital au sens de la présente invention, une poudre de gluten de blé contenant au moins 80 % en poids sur sec de protéines, 5 à 8 % en poids d'eau, le reste étant constitué de phospholipides, de fibres, d'amidon résiduel et de matières minérales.

La granulométrie de la poudre du gluten de blé dépend classiquement de la technologie utilisée pour sécher le gluten de blé extrait de la farine par voie humide (appelé gluten vert).

La société Demanderesse recommande alors de préparer une poudre de gluten de blé dont la granulométrie est la plus élevée possible.

En effet, la société Demanderesse a trouvé que la granulométrie influence directement :
- la vitalité de la poudre et la vitalité des pellets après l'étape de pelletisation,
- la faisabilité technique de la pelletisation proprement dite.

Une poudre trop fine, i.e. présentant moins de 1 % en poids de particules de taille > 250 µm, sera trop volatile et ne pourra pas être plaquée pour être comprimée dans la matrice. Il s'en suivra un bourrage et un arrêt de la matrice.

De manière préférentielle, la poudre de gluten de blé doit avoir une fraction pondérale d'au moins 50 % supérieure à 250 µm.

Dans l'étape 2, on introduit la poudre de gluten de blé ainsi préparée dans le malaxeur d'une presse à pellets.

Comme il sera exemplifié ci-après, la société Demanderesse utilise une presse de pelletisation du type LYD 66/23 commercialisée par la société STOLZ.

Le transport et le dosage doivent permettre d'avoir une alimentation continue et stable par un système de dosage afin d'avoir un fonctionnement du malaxeur stable et un mélange homogène pour l'alimentation de la matrice de pelletisation.

La stabilité du débit permettra d'avoir une consommation énergétique stable et un fonctionnement mécanique durable.

Avec une presse de pelletisation du type LYD 66/23 commercialisée par la société STOLZ, la société Demanderesse recommande de régler le débit à une valeur comprise entre 2 à 6 t/h, de préférence de l'ordre de 4 t/h.

Dans l'étape 3, on conditionne la poudre de gluten de blé ainsi préparée par addition régulée de vapeur à l'entrée du malaxeur afin d'obtenir à la sortie du malaxeur une température du mélange air-poudre comprise entre 10 et 50°C.

L'ajout de vapeur doit se faire avec de la vapeur sèche afin d'éviter la prise en masse de la poudre de gluten de blé dans le malaxeur pouvant entraîner un bourrage.

La vitesse de rotation de l'axe et des pâles du malaxeur doit être suffisante pour obtenir un mélange homogène à la sortie du malaxeur avec une température du mélange air-poudre comprise entre 10 et 50°C, de préférence comprise entre 30 et 45°C à la sortie du malaxeur.

Avec une presse de pelletisation du type LYD 66/23 commercialisée par la société STOLZ, la société Demanderesse recommande de régler la vitesse à une valeur comprise entre 250 et 400 trs/min.

La température est obtenue par ajout régulée ou contrôlée de vapeur, à l'aide d'une vanne régulatrice, à l'entrée du malaxeur par rapport à la mesure de la température sortie malaxeur afin d'obtenir une température réglée sur la température de consigne.

La vapeur ajoutée a un rôle de « lubrifiant » et facilite le passage de la poudre au travers de la matrice.

La vapeur a également un rôle de liant entre les particules de gluten poudre lors de la pelletisation.

Dans l'étape 4, on introduit la poudre de gluten de blé dans la matrice de la presse à pellets afin d'obtenir les pellets de gluten de blé.

La matrice est caractérisée par le taux de compression qui est le rapport de la longueur de compression sur le diamètre de compression.

Ce rapport est compris entre 15 et 25.

Ce rapport permet d'obtenir un taux de poussières inférieur à 20% en poids à la sortie de la matrice.

Dans l'étape 5, on refroidit les pellets au travers d'un refroidisseur horizontal afin d'assurer une dureté et un maintien des granulés.

Pour des valeurs de taux de compression de l'étape 4 supérieur à 15, après refroidissement des pellets dans cette étape 5, on obtient des pellets dont la durabilité comprise entre 50 et 100 %, de préférence comprise entre 80 et 100 %.

L'invention sera mieux comprise à l'aide des exemples qui suivent, lesquels se veulent illustratifs et non limitatifs.

### Exemple 1

On prépare 1 tonne de poudre de gluten de blé présentant les caractéristiques suivantes :
- au moins 50 % en poids de particules de taille supérieure à 250 µm,
- teneur en protéines > 83 % en poids sec/sec
- teneur en eau > 9%
- valeur de P/L > 3 selon l'alvéographe de Chopin.

On alimente le malaxeur d'une presse de pelletisation de type LYD 66/23 commercialisée par la société STOLZ à un débit de 4 t/h.

L'alimentation est effectuée via une vis doseuse dont la vitesse est réglée afin d'obtenir un débit de l'ordre de 4 t/h, et de manière à obtenir après ajout régulé de vapeur, au moyen d'une vanne régulatrice, une température sortie malaxeur de 35°C stable.

A la sortie du malaxeur, la poudre est dirigée par gravité vers la matrice de la presse de pelletisation dont le taux de compression est de 20.

Les pellets sont ensuite refroidis à la température ambiante sur un refroidisseur horizontal RHS2P 20.60 commercialisé par la société STOLZ.

Après broyage des granulés à l'aide du broyeur IKA comme décrit ci-dessus et analyse du broyat obtenu, les pellets de gluten de blé conformes à l'invention présentent les caractéristiques rassemblées en 2 séries d'échantillons (séries 1 et 2).

**Tableau 1**

| | Série 1 | Série 2 |
|---|---|---|
| Rétention d'eau (%) | 130 | 130 |
| Alvéographe de Chopin | | |
| P | 182 | 145 |
| L | 26 | 41 |
| P/L | 7,0 | 3,5 |
| Teneur en protéines (N6,25/sec) | 86,8 | 86, 9 |
| Teneur en eau | 9,0 | 11, 2 |
| Durabilité | 58 | 92 |

A titre comparatif, on trouve dans le tableau 2 suivant, les valeurs mesurées sur deux échantillons de gluten de blé vital et gluten de blé dévital, commercialisés par la société Demanderesse sous les marques respectives de VITEN® et DEVITEN®.

**Tableau 2**

| | VITEN® | DEVITEN® |
|---|---|---|
| Rétention d'eau (%) | 170 | Pas de rétention |
| Alvéographe de Chopin | | Pâte très cassante, tenace, qui ne sort pas du pétrin |
| P | 70 | |
| L | 120 | |
| P/L | 0,6 | |
| Teneur en protéines (N6,25/sec) | 85,4 | 85,5 |
| Teneur en eau | 6,2 | 6,7 |

Les pellets de gluten de blé conformes à l'invention, comme énoncé plus haut préservent donc bien leur capacité de rétention d'eau, avec cependant des propriétés élastiques quelque peu réduites.

### Exemple 2

On teste la capacité des pellets de gluten de blé conformes à l'invention à préserver le caractère fluide et homogène d'un mélange de protéines réhydratées à chaud dans un pré-conditionneur, par la mesure de l'écoulement du mélange final ainsi obtenu à travers un tamis de 1000 µm de taille de maille.

Pour ce faire, on introduit à chaud et sous agitation un mélange de protéines sous forme poudre, comprenant 50 % en poids de pellets de gluten de blé conformes à l'invention, dans un pré-conditionneur CUTTER STEPHAN UMC/SK5 double enveloppe, commercialisé par la société STEPHAN, équipé d'une injection directe de vapeur.

On injecte ainsi de la vapeur pour monter la température dudit mélange à 90°C et l'hydrater à environ 20 % d'eau.

Le mélange ainsi obtenu est ensuite tamisé sur un tamis de grosses mailles afin de récupérer les agglomérats et le pourcentage de refus est alors calculé.

Le tableau 3 suivant la formule de base des mélanges à tester.

**Tableau 3**

| Nature des protéines | Contenu en % | Contenu en poids (g) |
|---|---|---|
| MILUREX® | 40,5 | 202,5 |
| GLUTALYS® | 7 | 35 |
| Huile de colza | 2,5 | 12,5 |
| gluten de blé en pellets selon l'invention ou non | 50 | 250 |

On teste :
- deux lots de gluten vital en poudre témoins,
- trois lots de pellets de gluten de blé fabriqués selon l'exemple 1 ci-dessus, broyés sur broyeur à marteaux de marque RETSCH équipé d'une grille de 1000 µm, afin de présenter la même granulométrie que le gluten vital en poudre témoin (100 à 1000 µm).

On préchauffe le pré-conditionneur par injection de vapeur (0.7 bar) dans la double enveloppe du CUTTER de marque STEPHAN® et mélange les poudres à vitesse minimale (100 rpm) pendant 4 min.

Après 4 min de mélange, on arrête le chauffage de la double enveloppe.

On injecte de la vapeur directement dans l'enceinte du CUTTER à une pression de 0.7 bar, sous agitation à 100 rpm, pendant 30 secondes, afin d'obtenir une hydratation des poudres de 20% et une température de 90°C.

On tamise le mélange final obtenu sur un tamis de mailles carrées de 0.7 cm de côté

On calcule le pourcentage de refus par l'équation : (masse des agglomérats / masse totale du mix) x 100

Les résultats obtenus sont présentés dans le tableau 4 suivant.

**Tableau 4**

| | % en poids de refus sur 0.7 cm |
|---|---|
| Gluten vital | 32.7 % |
| | 30 % |
| Pellets de gluten conforme à l'invention | 2.6 % |
| | 1.1 % |
| | 2.8 % |

Ces résultats montrent clairement que le gluten vital, en formant son réseau viscoélastique, s'agglomère pendant la phase de pré-conditionnement avec les autres protéines du mélange, et forme ainsi un mélange hétérogène composé d'une part de poudres fluides et d'une part d'amas de gluten.

Au contraire, les pellets de gluten de blé conformes à l'invention, broyés, ne forment pas de réseaux et le mélange reste avantageusement fluide et homogène.

## Revendications

1. Pellets de gluten de blé, **caractérisés en ce qu'**ils présentent :
- une capacité de rétention d'eau, déterminée selon un test A, comprise entre 40 et 160 %, de préférence comprise entre 100 et 150 %,
- un comportement viscoélastique, selon l'alvéographe de Chopin, égal au rapport de la résistance de la déformation sur l'extensibilité P/L, compris entre 3 et 10, de préférence compris entre 3 et 8,
le test A consistant à :
- broyer les pellets de gluten de blé sur broyeur IKA A10 fabriqué par la société IKA® en plaçant 30 g de pellets dans le broyeur puis broyant sous circulation d'eau froide pendant 2 minutes de sorte à obtenir un broyat présentant 0 refus sur 500 µm, <10% de refus sur 250 µm, <50% de refus sur 100 µm,
- peser 10,0 g de pellets broyés dans une coupelle, ajouter 25 ml d'eau potable entre 5 et 20°C et mélanger avec une baguette en verre,
- laisser reposer 15 minutes,
- extraire la quantité d'eau non retenue par centrifugation pendant 10 minutes à 400 tours en laissant la centrifugeuse s'arrêter seule (sans frein), jeter le surnageant et peser le gluten hydraté restant (P),
- déterminer la capacité de rétention d'eau, exprimée en %, selon l'équation (P-10)x10.

2. Pellets selon la revendication 1, **caractérisés en ce qu'**ils présentent un comportement viscoélastique, selon l'alvéographe de Chopin, déterminé à une valeur de l'extensibilité L inférieur à 100, de préférence compris entre 20 et 80.

3. Pellets selon l'une ou l'autre des revendications 1 et 2, **caractérisés en ce qu'**ils présentent une teneur en protéines de plus de 80 % N6,25 / sec.

4. Pellets selon l'une quelconque des revendications 1 à 3, **caractérisés en ce qu'**ils présentent une humidité relative comprise entre 6 et 12 %.

5. Pellets selon l'une quelconque des revendications 1 à 4, **caractérisé en ce qu'**ils présentent une durabilité comprise entre 50 et 100 %, de préférence comprise entre 80 et 100 %.

6. Procédé de préparation des pellets de gluten de blé selon l'une quelconque des revendications 1 à 5, **caractérisé en ce qu'**il comprend les étapes suivantes :
1) préparer une poudre de gluten de blé vital de granulométrie telle qu'au moins 20 %, de préférence au moins 50 % des particules présentent une taille supérieure à 250 µm,
2) introduire la poudre de gluten de blé ainsi préparée dans le malaxeur d'une presse à pellets,
3) conditionner la poudre de gluten de blé ainsi préparée par addition régulée de vapeur à l'entrée du malaxeur afin d'obtenir à la sortie du malaxeur une température du mélange air-poudre comprise entre 10 et 50°C, de préférence comprise entre 30 et 45°C,
4) introduire la poudre de gluten de blé dans la matrice de la presse à pellets afin d'obtenir les pellets de gluten de blé,
5) refroidir les pellets au travers d'un refroidisseur horizontal,
6) récupérer les pellets ainsi obtenus.

7. Utilisation des pellets de gluten conformes aux revendications 1 à 5, ou obtenus conformément au procédé de la revendication 6, dans des procédés de fabrication de préparations alimentaires pour animaux comprenant de 5 à 50 % de gluten de blé, préparations choisies dans le groupe des préparations extrudées, des préparations pellétisées et des préparations destinées à être réhydratées.

## Claims

1. A wheat gluten pellet, **characterized in that** it exhibits:
- a water retention capacity, determined according to a test A, between 40 and 160%, preferably between 100 and 150%,
- a viscoelastic behavior, according to the Chopin alveograph, equal to the ratio of the deformation resistance over the extensibility P/L between 3 and 10, preferably between 3 and 8,
the test A consisting in:
- grinding the wheat gluten pellets in an IKA A10 mill manufactured by the company IKA® by placing 30 g of pellets in the mill and then grinding under circulating cold water for 2 minutes so as to obtain a groung product having an order of 0 residue on 500 µm, < 10% of residue on 250 µm, < 50% of residue on 100 µm,
- weighting 10.0 g of ground pellets in a dish, adding 25 ml of drinking water between 5 and 20°C and mixing with a glass rod,
- allowing to stand for 15 minutes,
- extracting the quantity of water not retained by centrifugation during 10 min at 4000 revolutions allowing the centrifuge to stop on its own (without brakes), discarding the supernatant and weighting the remaining hydrated gluten (P),
- determining the water retention capacity, expressed as %, according to the equation (P-10)×10.

2. The pellet as claimed in claim 1, **characterized in that** it has a viscoelastic behavior, according to the Chopin alveograph, determined at a value of the extensibility L less than 100, preferably between 20 and 80.

3. The pellet as claimed in either of claims 1 and 2, **characterized in that** it has a protein content of more than 80% N6.25 / dry.

4. The pellet as claimed in any one of claims 1 to 3, **characterized in that** it has a relative humidity between 6 and 12%.

5. The pellet as claimed in any one of claims 1 to 4, **characterized in that** it has a durability between 50 and 100%, preferably between 80 and 100%.

6. A process for the preparation of wheat gluten pellets as claimed in any one of claims 1 to 5, **characterized in that** it comprises the following steps:
1) preparing a vital wheat gluten powder of particle size such that at least 20%, preferably at least 50% of the particles have a size greater than 250 µm,
2) introducing the wheat gluten powder thus prepared into the blender of a pellet press,
3) conditioning the wheat gluten powder thus prepared by regulated addition of steam at the inlet of the blender in order to obtain at the outlet of the blender a temperature of the air-powder mixture between 10 and 50°C, preferably between 30 and 45°C,
4) introducing the wheat gluten powder into the die of the pellet press in order to obtain the wheat gluten pellets,
5) cooling the pellets through a horizontal cooler,
6) recovering the pellets thus obtained.

7. The use of the gluten pellets as claimed in claims 1 to 5, or obtained in accordance with the process of claim 6, in processes for the manufacture of feed preparations for animals comprising from 5 to 50% of wheat gluten, preparations chosen from the group of extruded preparations, pellet preparations and preparations intended to be rehydrated.

## Patentansprüche

1. Weizengluten-Pellets, **dadurch gekennzeichnet, dass** sie Folgendes aufweisen:
- ein gemäß einem Test A bestimmtes Wasserrückhaltevermögen zwischen 40 und 160%, vorzugsweise zwischen 100 und 150%,
- ein viskoelastisches Verhalten gemäß Chopin-Alveograph, gleich dem Quotienten aus dem Dehnwiderstand durch die Dehnbarkeit P/L, zwischen 3 und 10, vorzugsweise zwischen 3 und 8,
wobei bei man bei dem Test A:
- die Weizengluten-Pellets in einer von der Firma IKA® hergestellten IKA A10-Mühle zerkleinert, indem man 30 g Pellets in die Mühle überführt und dann unter Zirkulation von kaltem Wasser für 2 Minuten zerkleinert, so dass ein Mahlgut erhalten wird, bei dem 0 über 500 µm zurückgewiesen werden, < 10% über 250 µm zurückgewiesen werden, < 50% über 100 µm zurückgewiesen werden,
- 10,0 g gemahlene Pellets in einem Schiffchen abwiegt, 25 ml Trinkwasser zwischen 5 und 20°C hinzufügt und mit einem Glasstab mischt,
- 15 Minuten stehen lässt,
- die nicht aufgenommene Wassermenge durch Zentrifugation für 10 Minuten bei 400 Umdrehungen abnimmt, wobei man die Zentrifuge alleine (ohne Bremse) anhalten lässt, den Überstand verwirft und das verbleibende hydratisierte Gluten wiegt (P),
- das Wasserrückhaltevermögen in % gemäß der Gleichung (P - 10) x 10 bestimmt.

2. Pellets nach Anspruch 1, **dadurch gekennzeichnet, dass** sie ein viskoelastisches Verhalten gemäß Chopin-Alveograph aufweisen, das bei einem Dehnbarkeitswert L von unter 100, vorzugsweise zwischen 20 und 80, bestimmt wird.

3. Pellets nach einem der Ansprüche 1 und 2, **dadurch gekennzeichnet, dass** sie einen Proteingehalt von mehr als 80% N6,25/Trockenmasse aufweisen.

4. Pellets nach einem der Ansprüche 1 bis 3, **dadurch gekennzeichnet, dass** sie einen relativen Feuchtigkeitsgehalt zwischen 6 und 12% aufweisen.

5. Pellets nach einem der Ansprüche 1 bis 4, **dadurch gekennzeichnet, dass** sie eine Dauerhaftigkeit zwischen 50 und 100%, vorzugsweise zwischen 80 und 100% aufweisen.

6. Verfahren zur Herstellung von Weizengluten-Pellets nach einem der Ansprüche 1 bis 5, **dadurch gekennzeichnet, dass** das Verfahren folgende Schritte aufweist:
1) ein Pulver von vitalem Weizengluten mit einer derartigen Granulometrie herstellen, dass mindestens 20%, vorzugsweise mindestens 50% der Partikel eine Größe von mehr als 250 µm aufweisen,
2) das so hergestellte Weizengluten-Pulver in den Kneter einer Pelletpresse überführen,
3) das so hergestellte Weizengluten-Pulver durch geregelte Zufuhr von Dampf am Eingang des Kneters konditionieren, so dass am Ausgang des Kneters eine Temperatur des Luft-Pulver-Gemischs zwischen 10 und 50°C, vorzugszueise zwischen 30 und 45°C erhalten wird,
4) das Weizengluten-Pulver in die Matrize der Pelletpresse einbringen, so dass die Weizengluten-Pellets erhalten werden,
5) die Pellets durch eine Horizontal-Kühleinrichtung kühlen,
6) die so erhaltenen Pellets gewinnen.

7. Verwendung von Gluten-Pellets nach den Ansprüchen 1 bis 5 oder erhalten gemäß dem Verfahren nach Anspruch 6 bei Verfahren zur Herstellung von Lebensmittelzubereitungen für Tiere, die 5 bis 50% Weizengluten umfassen, wobei die Zubereitungen aus der Gruppe der extrudierten Zubereitungen, der pelletierten Zubereitungen und der Zubereitungen, die rehydratisiert werden müssen, ausgewählt sind.
